# EUROPÄISCHE PATENTSCHRIFT

(11) **EP 2 731 857 B1**
(45) Veröffentlichungstag und Bekanntmachung des Hinweises auf die Patenterteilung: **16.09.2015**
(21) Anmeldenummer: 12740880.5
(22) Anmeldetag: 07.07.2012
(51) Int. Cl.: B62K 25/00

(54) **HINTERRADANTRIEB**
REAR WHEEL DRIVE
ENTRAÎNEMENT DE ROUE ARRIÈRE

(30) Priorität: 14.07.2011 DE 102011051850
(43) Veröffentlichungstag der Anmeldung: 21.05.2014
(73) Patentinhaber: Bettin, Karsten, 30173 Hannover (DE)
(72) Erfinder: Bettin, Karsten, 30173 Hannover (DE)
(86) Internationale Anmeldenummer: PCT/DE2012/100207
(87) Internationale Veröffentlichungsnummer: WO 2013/007253

(56) Entgegenhaltungen:
- BE-A- 558 090
- DE-A1-102007 012 535
- US-A1- 2006 108 858
- US-A1- 2006 108 859

## Beschreibung

### Technisches Gebiet

Die Erfindung betrifft einen Hinterradantrieb gemäß dem Oberbegriff des Anspruchs 1, wahlweise für Fahrräder mit kleinen Laufrädern oder für Anhängefahrräder.

### Stand der Technik

Aus der US 2006/010 8 859 A1 ist ein Hinterradantrieb mit den Merkmalen des Oberbegriffes des Anspruchs 1 bekannt.

Fahrräder werden vorzugsweise mit Kettentrieb angetrieben. Das mit der Tretkurbel verbundene Antriebs-Kettenrad liegt dabei axial gesehen überwiegend außerhalb des Fahrradrahmens, während der auf der Hinterradachse gelagerte Abtriebs-Zahnkranz axial gesehen überwiegend innerhalb des Fahrradrahmens zwischen Fahrradrahmen und Hinterrad angeordnet ist.

Fahrräder mit kleineren Laufrädern werden vorzugsweise eingesetzt, um kleine Packmaße und Gewichte zu erreichen, häufig ausgeführt als Falträder. Fahrräder mit Laufrädern von 14 Zoll und weniger erfordern eine Übersetzung zwischen Trittfrequenz und Laufradfrequenz von wenigstens etwa 1 : 5, um eine nutzungsgerechte Entfaltung zu erreichen.

Darüber hinaus sind Anhängefahrräder für Fahrräder bekannt, die hinten an ein Fahrrad gehängt werden und die im Gegensatz zu den Fahrrädern, an denen sie hängen, zumeist deutlich kleinere Laufräder aufweisen. Bislang werden für diese Laufräder zumeist Getriebe mit ähnlichen Übersetzungen eingesetzt wie für die Fahrräder selbst. Damit muss die Person, die auf dem Anhängefahrrad fährt, mit deutlich höheren Trittfrequenzen fahren als die Person auf dem Fahrrad, an dem das Anhängefahrrad hängt. Auch Anhängefahrräder mit kleinen Laufrädern erfordern die oben genannten Übersetzungen zwischen Trittfrequenz und Laufradfrequenz.

Um vorgenannte Übersetzungen mit einem einstufigen Kettentrieb zu erreichen, muss ein Abtriebs-Zahnkranz mit möglichst wenig Zähnen eingesetzt werden. Alle in diesem Dokument nachfolgend benannten Zähnezahlen der Abtriebs-Zahnkränze und Antriebskettenräder beziehen sich auf die für Fahrradketten übliche Kettenteilung von 12,7 mm. Andere Ausführungsformen von Ketten sind ebenfalls von der Erfindung umfasst.

In folgenden Lösungen werden Abtriebs-Zahnkränze mit geringen Zähnezahlen eingesetzt:
a. In den meisten Fällen ist der Abtriebs-Zahnkranz axial gesehen zwischen dem Fahrradrahmen und dem Hinterrad angeordnet, wobei der Abtriebs-Zahnkranz auf einer fest mit dem Fahrradrahmen verbundenen Hinterradachse gelagert ist. Diese Lösung hat den Nachteil, dass aufgrund der aus den Biegebelastungen resultierenden Festigkeitsanforderungen an die Hinterradachse diese über ihre gesamte Länge einen Mindestdurchmesser aufweisen muss, auf dem der Abtriebs-Zahnkranz gelagert wird, wodurch die Zähnezahl des Abtriebs-Zahnkranzes wenigstens neun Zähne beträgt. Außerdem hat die Lösung den Nachteil, dass der erforderliche Freilauf in der Hinterradnabe oder am Tretlager angeordnet werden muss. Aus JP 2003 - 054 479 A ist ein Kettentrieb mit einem Abtriebs-Zahnkranz mit lediglich acht Zähnen bekannt. Nachteilig ist hier, dass systembedingt am Hinterrad keine Freilaufkupplung vorgesehen ist. Diese müsste dann im Kraftfluss gesehen zwischen Tretkurbel und Antriebskettenrad angeordnet werden.
b. Aus JP 11 - 321 768 A ist ein Kettentrieb bekannt, der einen außerhalb des Fahrradrahmens angeordneten Abtriebs-Zahnkranz mit lediglich sieben Zähnen verwendet. Nachteilig an dieser Lösung ist, dass der Abtriebs-Zahnkranz ein Außengewinde aufweist, das direkt mit der Hinterradwelle verschraubt ist und dass eine Freilaufkupplung zwischen dem Tretlager und dem Antriebs-Kettenrad angeordnet ist, wodurch kein handelsübliches, mit einer Tretkurbel direkt verbundenes Antriebs-Kettenrad verwendet werden kann und wodurch der Abtriebs-Zahnkranz, das Antriebs-Kettenrad und die Kette im Freilauflauffall mitdrehen.
c. Aus DE 101 27 614 A1 ist ein Kettentrieb mit einem Abtriebs-Zahnkranz von weniger als 11 Zähnen beziehungsweise mit 7 Zähnen bekannt. Nachteilig ist, dass das Hinterrad drehfest mit der Kette verbunden ist und eine Freilaufkupplung nicht vorgesehen ist.
d. Aus JP 2005 - 289 283 A ist eine einarmige Hinterradaufhängung am Fahrradrahmen bekannt, wobei die Abtriebszahnkränze des Kettentriebes in dem zum Kettenkasten ausgebildeten Fahrradrahmen beidseitig gelagert sind und das Hinterrad außerhalb des Kettenkastens auf einer Seite des Fahrradrahmens angeordnet ist. Zwischen den Abtriebs-Zahnkränzen und der Hinterradwelle ist eine Freilauf-Kupplung angeordnet. Um einen für Fahrräder üblichen Kettenlinienabstand für den Fahrradantrieb zu erreichen, ist der Fahrradrahmen axial gesehen zwischen den Abtriebszahnkränzen und dem Hinterrad als dünnwandiger Kettenkasten ausgeführt. Dies hat zur Folge, dass Hinterradwelle und Tretlagerwelle zur Erreichung der erforderlichen Steifigkeiten zwischen Hinterradwelle und Kettenkasten beziehungsweise zwischen Tretlagerwelle und Kettenkasten axial gesehen auf beiden Seiten des Abtriebszahnkranzes beziehungsweise des Antriebskettenrades zum Kettenkasten gelagert werden müssen. Nachteilig ist, dass die Hinterradwelle damit im Bereich der Freilaufkupplung die von dem Hinterrad eingeleiteten, gewichtsbedingten Biegemomente aufnehmen und einen den Festigkeitsanforderungen genügenden Mindestdurchmesser aufweisen muss und dass damit der kleinste Abtriebs-Zahnkranz des Zahnkranzpaketes wenigstens 13 Zähne aufweist.

Nachteilig ist weiterhin, dass durch die beidseitige Lagerung der Hinterradwelle und des Antriebs-Kettenrades in einem tragenden Kettenkasten kein handelsübliches, mit einer Tretkurbel direkt verbundenes Antriebskettenrad verwendet werden kann.

US 2006/0 108 858 A1, US 2006/0 108 859 A1 und BE 558 090 A offenbaren Hinterradantriebe, bei denen ein Lager eine Hinterradwelle zum Rahmen lagert und im Kraftfluss gesehen zwischen einem Antreiber und der Hinterradwelle ein Freilauf angeordnet ist, wobei der Freilauf als abgeschlossene Einheit auf der Hinterradwelle montiert ist. Der Freilauf umfasst eine Freilaufkupplung und Lager, die den Antreiber auf der Hinterradwelle lagern.

Nachteilig an diesen Ausführungsformen ist, dass die Lager des Freilaufs den Antreiber jeweils zur Hinterradwelle lagern und damit radial gesehen zwischen dem Antreiber und der Hinterradwelle angeordnet sind. Damit kann der zwischen diesen Lagern angeordnete Freilaufmechanismus konstruktionsbedingt nur wiederum radial gesehen zwischen den Zahnkränzen des Antreibers und der Hinterradwelle verwirklicht werden. Außerdem ist die abgeschlossene Freilaufeinheit zur Hinterradwelle mit einer Welle-Nabe-Verbindung verbunden. Der im Bereich der Lager, der Freilaufkupplung und der Welle-Nabe-Verbindung für diese Elemente erforderliche radiale Einbauraum lässt wegen der für Fahrräder erforderlichen Festigkeiten eine Verwirklichung eines Antreibers mit einem Abtriebs-Zahnkranz von weniger als 11 Zähnen in diesem Bereich wahrscheinlich nicht zu. Für diese Nachteile verantwortlich ist insbesondere dasjenige den Antreiber lagernde Lager, das axial gesehen zwischen dem Freilaufmechanismus und dem die Hinterradwelle zum Rahmen lagernden Lager angeordnet ist Dieses Lager verhindert, dass auf dem Antreiber ein Abtriebs-Zahnkranz mit geringer Zähnezahl und einem akzeptablen Kettenlinienabstand verwirklicht werden kann.

### Darstellung der Erfindung

Aufgabe der Erfindung ist es, wahlweise für Fahrräder oder für Anhängefahrräder einen Hinterradantrieb mit wenigstens einem von einem Kettentrieb angetriebenen Abtriebs-Zahnkranz zu entwickeln, wobei der Hinterradantrieb eine zwischen einem Antreiber und einer Hinterradwelle angeordnete Freilaufkupplung und der Abtriebs-Zahnkranz trotzdem geringstmögliche Zähnezahlen aufweist und wobei der Hinterradantrieb die Verwendung eines handelsüblichen, mit einer Tretkurbel direkt verbundenen Antriebs-Kettenrades mit einem für Fahrräder üblichen Kettenlinienabstand ermöglicht. In Kombination mit dem Antriebskettenrad soll das Verhältnis der Zähnezahlen von Abtriebs-Zahnkranz und Antriebs-Kettenrad 1:5 oder weniger betragen können, um eine für kleine Laufräder geeignete niedrige Gesamtübersetzung zu erreichen.

Zur Lösung dieser Aufgabe bei einem gattungsgemäßen Hinterradantrieb dienen die kennzeichnenden Merkmale des Anspruchs 1.

Da die Hinterradwelle durch die Anordnung des Abtriebs-Zahnkranzes auf der dem Hinterrad gegenüber liegenden Seite des Fahrradrahmens im Bereich der Freilaufkupplung nur Torsionsmomente und keine gewichtsbedingten Biegebelastungen übertragen muss, kann die Hinterradwelle im Bereich des Abtriebs-Zahnkranzes deutlich geringere Durchmesser aufweisen, wodurch im Kraftfluss gesehen zwischen Abtriebs-Zahnkranz und Hinterradwelle eine Freilaufkupplung verwirklicht werden kann und der Abtriebs-Zahnkranz sehr geringe Zähnezahlen von weniger als 13 Zähnen bis zu 6 Zähnen aufweisen kann.

Die Zähnezahl des Abtriebs-Zahnkranzes bestimmt den maximalen Außendurchmesser des Antreibers, der mit zwei Lagern zu lagern ist. Der Umstand, dass ein Antreiber mit sehr geringen Zähnezahlen auf der zum Fahrradrahmen weisenden Seite nicht wie im Stand der Technik radial gesehen innen zur Hinterradwelle sondern radial gesehen außen zum Fahrradrahmen gelagert ist, schafft den erforderlichen Platz zur Anordnung einer den Festigkeitserfordernissen genügenden Freilaufkupplung zwischen dem Antreiber und einer Hinterradwelle mit ausreichend großem Durchmesser zur sicheren Übertragung der auftretenden Drehmomente.

Weitere vorteilhafte Ausgestaltungen der Erfindung ergeben sich aus den Unteransprüchen.

Wesentliche Vorteile der Erfindung bestehen darüber hinaus darin,
a. dass für den Hinterradantrieb sowohl Varianten zur einarmigen Aufhängung im Fahrradrahmen als auch Varianten zur zu beiden Seiten des Hinterrades vorgesehenen Aufhängung im Fahrradrahmen ausgeführt werden können.
b. dass der Hinterradantrieb aufgrund erreichbarer Übersetzungen des Kettentriebes insbesondere für Fahrräder mit kleinen Laufradgrößen von 8 bis 14 Zoll eingesetzt werden kann und dabei sehr geringe Achsabstände zwischen Tretlagerachse und Hinterradwelle verwirklicht werden können, um beispielsweise für Falträder kleine Faltmaße zu erreichen.
c. dass durch die zwischen dem Antreiber und der Hinterradwelle angeordnete Freilaufkupplung weder innerhalb des Laufrades noch am Tretlager eine Freilaufkupplung vorgesehen werden muss, wodurch unterschiedliche Formen von Laufrädern verwendet und fest mit dem Hinterradantrieb verbunden werden können und wodurch derselbe Hintenadantrieb bei gleicher erreichbarer Entfaltung auf unterschiedliche Laufradgrößen angepasst werden kann, indem das Antriebskettenrad des Kettentriebes gewechselt wird.
d. dass durch die mit den Merkmalen der Unteransprüche besonders platzsparend ausgeführten Getriebekomponenten ergonomisch günstige Kettenlinienabstände erreicht werden, die weniger als 40 mm betragen können.

### Kurze Beschreibung der Zeichnungen

Fig. 1 zeigt die Schnittansicht einer ersten Ausführungsform des Hinterradantriebes in einer einarmigen Aufhängung im Fahrradrahmen mit einem zwei Abtriebs-Zahnkränze mit acht beziehungsweise neun Zähnen aufweisenden Antreiber, einer Sperrklinken-Freilaufkupplung und einer zweiteiligen Hinterradwelle.
Fig. 2 zeigt die Schnittansicht I - I durch den Antreiber und die Freilaufkupplung aus Fig. 1 sowie den 8 Zähne aufweisenden Abtriebs-Zahnkranz.
Fig. 3 zeigt eine teilgeschnittene Ansicht der Antriebswelle der Hinterradwelle, des die Abtriebs-Zahnkränze aufweisenden Antreibers und der Freilaufkupplung im Freilauffall aus Fig. 1.
Fig. 4 zeigt die Schnittansicht einer zweiten Ausführungsform des Hinterradantriebes in einer einarmigen Aufhängung im Fahrradrahmen mit einem einen Abtriebs-Zahnkranz mit sieben Zähnen aufweisenden Antreiber, einer Stirnzahn-Freilaufkupplung und einer zweiteiligen Hinterradwelle.
Fig. 5 zeigt die teilgeschnittene Ansicht II-II der Freilaufkupplung aus Fig. 4 mit den Bestandteilen Druckstück, Druckfeder, Druckhülse und Führungsbuchse.
Fig. 6 stellt die entsprechende Seitenansicht des Hinterradantriebes aus Fig. 4 dar.
Fig. 7 zeigt eine dritte Ausführungsform des Hinterradantriebes mit einem einen Abtriebs-Zahnkranz mit sechs Zähnen aufweisenden Antreiber, einer Stirnzahn-Freilaufkupplung, einer ungeteilten Hinterradwelle, auf der ein 10 Zoll-Vollkunststofflaufrad befestigt ist.
Fig. 8 zeigt eine Ansicht des Hinterradantriebes aus Fig. 7 mit dem sechs Zähne aufweisenden Abtriebs-Zahnkranz.
Fig. 9 zeigt in der Seitenansicht eine vierte Ausführungsform des Hinterradantriebes mit einer Sperrklinken-Freilaufkupplung, wobei der Abtriebs-Zahnkranz lediglich sieben Zähne aufweist.
Fig. 10 bis Fig. 12 zeigen eweitere Ausführungsformen der Stirnverzahnung von Kupplungsglied und Antreiber für die Ausführungsformen in Fig. 4 und Fig. 7.
Fig. 13 zeigt eine Schnittansicht und eine Ansicht des Antreibers und der Freilaufkupplung einer weiteren Ausführungsform, wobei der Abtriebs-Zahnkranz drehfest, aber lösbar mit dem Antreiber verbunden ist und lediglich sieben Zähne aufweist.

### Bester Weg zur Ausführung der Erfindung und bevorzugte Ausführungsformen

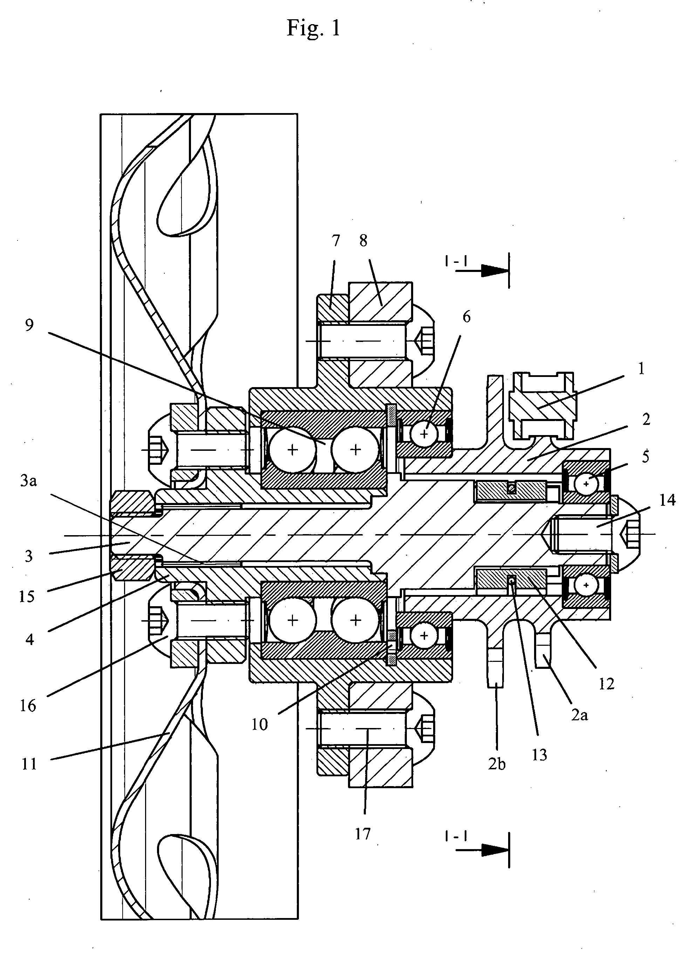

Fig. 1 zeigt eine erste Ausführungsform des Hinterradantriebes in einer einarmigen Aufhängung im Fahrradrahmen.

Eine von einer Kette 1 angetriebene Antreiber 2 weist zwei Abtriebszahnkränze 2a und 2b eines Endlos-Kettentriebes auf und ist nach einem besonderen Merkmal der Erfindung auf seiner einen Seite radial gesehen innen auf einer Hinterradwelle, die in dieser Ausführungsform als zweiteilige Hinterradwelle bestehend aus einer Antriebswelle 3 und einer Abtriebswelle 4 ausgeführt ist, mittels eines Lagers 5 und auf seiner anderen Seite radial gesehen außen über ein Lager 6 in einer Lagerbuchse 7 gelagert.

Die Lagerbuchse 7 ist fest oder lösbar mit einem Fahrradrahmen 8 verbunden. Die Lagerbuchse 7 nimmt ein zweireihiges Lager 9, vorzugsweise ein Schrägkugellager auf, das wiederum radial gesehen innen die Antriebswelle 4 der Hinterradwelle lagert. Das Schrägkugellager ist in der Lagerbuchse 7 mittels eines Sicherungsrings 10 axial festgelegt. Auf der Abtriebswelle 4 ist ein Hinterrad 11 befestigt. Die Antriebswelle 3 der Hinterradwelle ist mit der Abtriebswelle 4 der Hinterradwelle über eine Zahnwellenverbindung 3a drehfest wirkverbunden. Ebenso ist eine Gewindeverbindung oder ähnliches ausführbar und von der Erfindung umfasst.

Ebenso möglich und von der Erfindung umfasst ist eine Anordnung von zwei nebeneinander liegenden Lagern für die Lagerung der Hinterradwelle im Fahrradrahmen, die mit der Lagerbuchse 7 verbunden sind, oder auch eine zu beiden Seiten des Hinterrades 11 erfolgende Lagerung der Hinterradwelle. Um die Antriebswelle 3 der Hinterradwelle keinen stoßbedingten und keinen wesentlichen gewichtsbedingten Biegemomenten auszusetzen, ist die Hinterradwelle nach einem besonderen Merkmal der Erfindung axial gesehen nur auf einer Seite des Antreibers tragend zum Fahrradrahmen 8 gelagert. Dies ermöglicht die Ausführung einer radial gesehen besonders platzsparenden, im Kraftfluss gesehen zwischen dem Antreiber 2 und der Hinterradwelle angeordneten Freilaufkupplung, wodurch besonders kleine Abtriebs-Zahnkränze 2a und 2b auf dem Antreiber 2 verwirklicht werden können.

Nach einem besonderen Merkmal der Erfindung ist zwischen dem Antreiber 2 und der Antriebswelle 3 der Hinterradwelle ein Sperrklinkenfreilauf, bestehend aus wenigstens einer Sperrklinke 12 und einem Federring 13, angeordnet. Wie in Fig. 1 dargestellt, weist das Lager 5 nach einem weiteren Merkmal der Erfindung einen kleineren Innendurchmesser auf als der Innenkreis der auf der Antriebswelle 3 der Hinterradwelle vorgesehenen Ausnehmungen für die Sperrklinken 12, wodurch diese Ausnehmungen stirnseitig gefräst werden können.

Die axiale Festlegung der Lager 5 und 6 erfolgt mit einer Schraube 14, die in die Antriebswelle 3 der Hinterradwelle eingeschraubt ist und das Lager 5 gegen den Antreiber 2 und diesen gegen das Lager 6 und dieses gegen den Sicherungsring 10 verspannt. Statt der Schraube 14 kann ebenso eine Mutter verwendet werden. In diesem Fall müsste die Antriebswelle 3 der Hinterradwelle ein entsprechendes Außengewinde aufweisen. Diese und weitere mögliche Ausführungsformen (beispielsweise mit Sicherungsringen) der axialen Festlegung der Lager 5 und 6 sind ebenfalls von der Erfindung umfasst.

Ebenso kann auf den Sicherungsring 10 verzichtet werden, wobei dann die Schraube 14 über das Lager 5 und den Antreiber 2 das Lager 6 direkt gegen das Schrägkugellager 9 verspannt. Auch diese Ausführungsform ist von der Erfindung umfasst.

Eine Mutter 15 verkontert die Antriebswelle 4 der Hinterradwelle gegen die Antriebswelle 3. In diesem Ausführungsbeispiel ist die Abtriebswelle 4 der Hinterradwelle zu einem Hinterradflansch ausgebildet und weist am Umfang mindestens drei, vorzugsweise vier oder fünf Muttergewinde auf, an die mit Hilfe von Schrauben 16 das Hinterrad 11 angeschraubt werden kann.

Der Hinterradantrieb und die Freilaufkupplung werden nach außen durch die gedichteten Lager 5, 6 und 9 abgedichtet. Weitere dynamische Dichtungen sind nicht erforderlich.

Um Antriebswelle 3 und Antriebswelle 4 der Hinterradwelle radial zu zentrieren, weist die Antriebswelle 3 eine Zentrierfläche auf. Ebenso weist die Abtriebswelle 4 eine Zentrierfläche für das Hinterrad 11 auf.

Nach einem weiteren Merkmal der Erfindung können die Außendurchmesser der Antriebswelle 3 und der Abtriebswelle 4 der Hinterradwelle an den außen liegenden, nicht miteinander verbundenen Enden größer sein als axial gesehen auf Höhe des Schrägkugellagers 9.

Damit können zur Aufnahme des Hinterrades 11 und zur Übertragung der Gewichtskräfte und Drehmomente von der Abtriebswelle 4 der Hinterradwelle auf das Hinterrad 11 und umgekehrt neben der gezeigten Ausführungsform viele für einseitige Laufradbefestigungen bereits bekannte Ausführungsformen für die Abtriebswelle 4 vorgesehen werden. Auch diese Ausführungsformen sind von der Erfindung umfasst.

Ebenso können vielerlei Formen von Hinterrädern eingesetzt werden, die entweder direkt mit der Abtriebswelle 4 der Hinterradwelle verschraubt sind oder die über zusätzliche Elemente des Hinterrades 11 mit der Abtriebswelle 4 der Hinterradwelle verbunden werden können.

Im Ausführungsbeispiel aus Fig. 1 dienen Schrauben 17 zur Befestigung der Lagerbuchse 7 am Fahrradrahmen 8. Auch hier ist wiederum eine Vielzahl von stoffschlüssigen oder lösbaren Verbindungen zwischen der Lagerbuchse 7 und dem Fahrradrahmen 8 möglich und von der Erfindung umfasst.

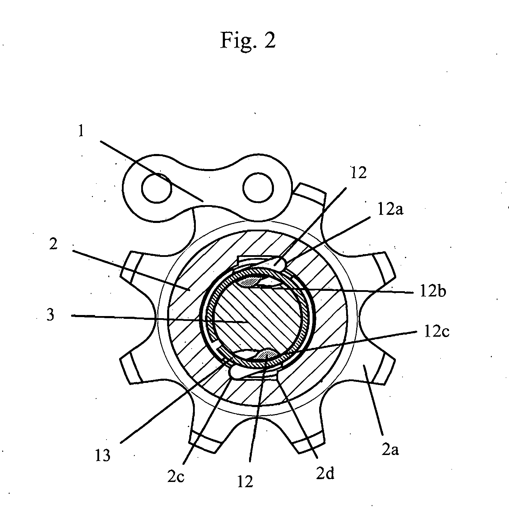

Fig. 2 zeigt die Schnittansicht I - I durch den Antreiber 2 und die Freilaufkupplung aus Fig. 1.

Der in einer Ausnehmung der Sperrklinke 12 in der Mitte der Sperrklinke 12 angeordnete Federring 13 der Freilaufkupplung drückt die Sperrklinke 12 radial gesehen nach außen, wodurch diese mit ihrer zum Antreiber 2 weisenden Abrundung 12a in eine Ausnehmung 2c des Antreibers 2 gedrückt wird. Die Sperrklinke 12 weist an ihrem zur Hinterradwelle angeordneten Ende Rundungen 12b auf, die die erforderliche Drehbeweglichkeit der Sperrklinke 12 auf der Hinterradwelle ermöglichen. Die Sperrklinke 12 weist darüber hinaus eine Kante 12c auf, die im Kupplungsfall von dem Federring 13 radial nach innen gedrückt wird beziehungsweise die den Federring 13 im Freilauffall radial nach außen drückt. Durch dieses Prinzip wird die Freilaufkupplung verwirklicht: Der im Freilauffall gespannte Federring 13 übt eine radial nach innen gerichtete Kraft auf die Kante 12c der Sperrklinke 12 aus. Die Sperrklinke 12 dreht sich radial nach außen, sobald der die Hinterradwelle überholende Antreiber mit seiner Ausnehmung den entsprechenden radialen Raum freigibt, wodurch schließlich die Abrundung 12a der Sperrklinke in die Ausnehmung 2c des Antreibers 2 gedrückt wird. Überholt die Hinterradwelle im Freilauffall den Antreiber 2, wird die Sperrklinke 12 durch den Antreiber 2 wieder radial nach innen gedreht, wodurch sich wiederum der Federring 13 spannt. Diese Prinzipien sind hinlänglich bekannt und werden hier nicht weiter ausgeführt.

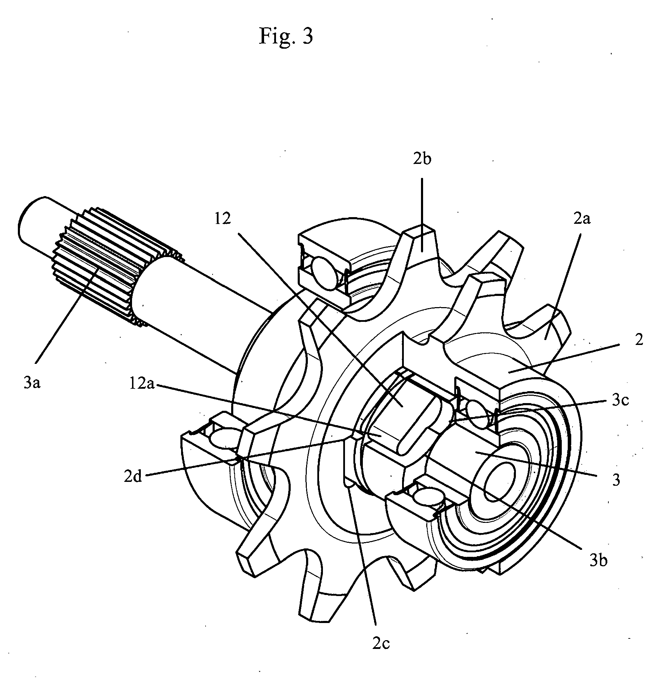

Wie in Fig. 2 dargestellt, weist nach einem weiteren Merkmal der Erfindung der Abtriebs-Zahnkranz 2a lediglich 8 Zähne auf, während der Abtriebs-Zahnkranz 2b, wie aus Fig. 3 hervorgeht, neun Zähne aufweist.

Fig. 3 zeigt eine teilgeschnittene Ansicht der Antriebswelle 3 der Hinterradwelle, des die Abtriebs-Zahnkränze 2a und 2b aufweisenden Antreibers 2 und der Freilaufkupplung im Freilauffall aus Fig. 1.

Wie in Figur 3 dargestellt sind nach einem weiteren Merkmal der Erfindung lediglich zwei stirnseitig fräsbare halbrunde Ausnehmungen 3b und 3c in der Antriebswelle 3 vorzusehen, um die Sperrklinke 12 für den Freilauffall innerhalb des dortigen Durchmessers der Antriebswelle 3 der Hinterradwelle unterzubringen.

Nach einem Merkmal der Erfindung weist der Antreiber 2 nabenseitig eine für Passfedern übliche rechteckige Ausnehmung 2d auf, wobei der Antreiber 2 auf der mit der Sperrklinke 12 in Kontakt stehenden Seite der Ausnehmung nach einem Merkmal der Erfindung zusätzlich die halbrunde, fräsbare Ausnehmung 2c aufweist, in die die Abrundung 12a der Spenklinke zur Kraftübertragung eingreift.

Da nach einem Merkmal der Erfindung die Antriebswelle 3 der Hinterradwelle und der Antreiber 2 jeweils halbrunde Ausnehmungen 2c beziehungsweise 3c zur Führung der Sperrklinken 12 aufweisen, können die Anforderungen an die absolute, auf die Antriebswelle 3 bezogene Positionsgenauigkeit dieser Ausnehmungen 2c und 3c gering gewählt werden, solange zwischen mehreren gleichartigen halbrunden Ausnehmungen 2c beziehungsweise 3c eine hohe relative, auf die Ausnehmungen 2c beziehungsweise 3c untereinander bezogene Positionsgenauigkeit besteht.

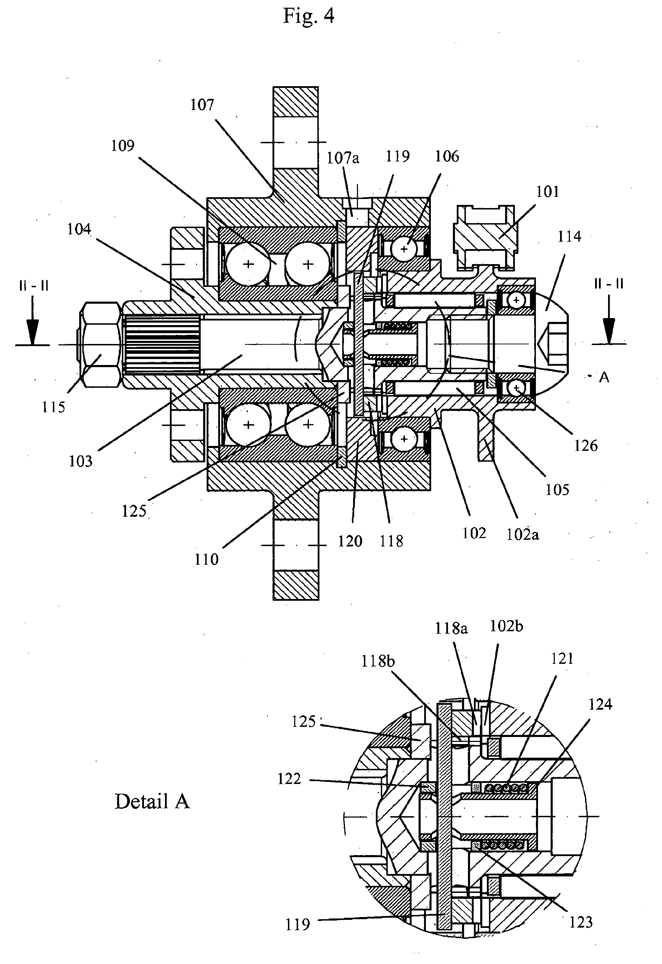

Fig. 4 zeigt eine zweite Ausführungsform des Hinterradantriebes.

Aus Gründen der Übersichtlichkeit wurden die zu Fig. 1 beschriebenen und in Fig. 4 mit entsprechender Funktion vertretenen Teile des Hinterradantriebes in Fig. 4 mit einer im Vergleich zu Fig. 1 um 100 erhöhten Ziffer bezeichnet. Sofern nachfolgend nicht abweichend beschrieben, ist die Beschreibung der Teile in Fig. 1 für die entsprechenden Teile in Fig.4 zu übertragen.

Im Vergleich zu Fig. 1 sind folgende Merkmale modifiziert:
a. Als Freilaufkupplung wird zwischen dem Antreiber 102 und einem axial durch eine Druckfeder 121 und eine Druckplatte 119 verschieblichen Kupplungsglied 118 eine Stirnzahnverbindung und zwischen Kupplungsglied 118 und Hinterradwelle eine Evolventenverzahnung verwirklicht.
b. Der Andrückmechanismus für das Kupplungsglied 118 der Freilaufkupplung ermöglicht eine Anordnung der Druckfeder 121 auf der zum Antreiber 102 gewandten Seite der Druckplatte 119.
c. Der Antreiber 102 ist radial gesehen innen durch einen Nadelkranz 105 auf der Hinterradwelle gelagert. Ein außen liegende Lager 126 dient lediglich der axialen Fixierung des Antreibers 102.
d. Der Antreiber 102 weist einen Abtriebs-Zahnkranz 102a mit lediglich sieben Zähnen auf.

Zu a. Von dem einen Abtriebs-Zahnkranz 102a mit sieben Zähnen aufweisenden Antreiber 102 wird das Drehmoment mit einem axial verschieblichen und mit der Antriebswelle 103 der Hinterradwelle drehfest wirkverbundenen Kupplungsglied 118 auf die Antriebswelle 103 übertragen. Zu diesem Zweck sind an einer Stirnseite des Kupplungsgliedes 118 gleichmäßig am Umfang verteilt Stirnzähne 118a angeordnet, die in entsprechende Ausnehmungen, in Fig. 4 in entsprechende Stirnzähne 102b, des Antreibers 102 greifen können. Ebenso ist es möglich und von der Erfindung umfasst, dass nur ein Kupplungspartner Stirnzähne aufweist und der andere Kupplungspartner an seiner Stirnseite Klauen aufweist, in die die Stirnzähne des einen Kupplüngspartners eingreifen können. Auch diese Ausführungsformen sind von der Erfindung umfasst.

Die Stirnzähne 118a des Kupplungsgliedes 118 werden von einer die Antriebswelle 103 der Hinterradwelle rechtwinklig zu deren Achse durchdringenden, in entsprechenden Ausnehmungen der Antriebswelle 103 der Hinterradwelle angeordneten Druckplatte 119 axial in Stirnzähne 102b des Antreibers 102 gedrückt.

Radial gesehen innerhalb des Kupplungsgliedes 118 ist eine Evolventenverzahnung 118b vorgesehen, die das Drehmoment von dem Kupplungsglied 118 auf die Antriebswelle 103 überträgt.

Nach einem weiteren Merkmal der Erfindung wird für die Übertragung des Drehmomentes von dem Kupplungsglied 118 auf die Antriebswelle 103 eine Evolventenverzahnung 118b des Moduls 0,8 mit 16 Zähnen nach DIN 5480 verwendet, wodurch die Zähnezahl durch vier teilbar ist und der Fußkreisdurchmesser etwas größer als 12 mm und der Kopfkreisdurchmesser etwas kleiner als 14 mm ist. Demgegenüber sind nach einem weiteren Merkmal der Erfindung acht Stirnzähne 118a, und damit wiederum eine durch vier teilbare Zähnezahl, für die Stirnverzahnung des Kupplungsgliedes 118 vorgesehen. Die mit den durch vier teilbaren Zähnezahlen erreichte Symmetrie erlaubt eine einfache Herstellung des Kupplungsgliedes 118 und des Antreibers 102.

Das Kupplungsglied 118 der Freilaufkupplung weist nach einem Merkmal der Erfindung folgenden besonders platzsparenden Aufbau auf: Das Kupplungsglied 118 weist an einer Stirnseite eine Stirnverzahnung mit den Stirnzähnen 118a auf und das Kupplungsglied 118 weist keine Ausnehmungen zur Aufnahme und Führung der Druckplatte 119 auf. Die Druckplatte 119 kann rechteckig und ohne weitere Ausnehmungen ausgeführt werden. Neben einer Druckplatte können auch runde Druckstäbe oder abgeflachte Druckstäbe eingesetzt werden. Auch diese Ausführungsformen sind von der Erfindung umfasst. Nach einem weiteren Merkmal der Erfindung ist axial gesehen zwischen dem Sicherungsring 110 und dem den Antreiber 102 radial gesehen innen lagernden Lager 106 eine Scheibe 120 angeordnet, die die Druckplatte 119 radial gesehen in Position hält.

Durch die Anordnung der Elemente des Hinterradantriebes können zwischen dem Schrägkugellager 109 und der Abtriebswelle 104 der Hinterradwelle sowie zwischen dem Schrägkugellager 109 und der Lagerbuchse 107 die erforderlichen festen Passungen vorgesehen werden.

Zu b. Da als Kupplung zwischen Antreiber 102 und Kupplungsglied 118 eine Stirnverzahnung verwendet wird, muss das Kupplungsglied 118 axial gegen den Antreiber 102 bewegt werden. Dies erfolgt über die Druckplatte 119 durch eine innerhalb der Hinterradwelle angeordnete Druckfeder 121 nach dem nachfolgend beschriebenen Mechanismus:

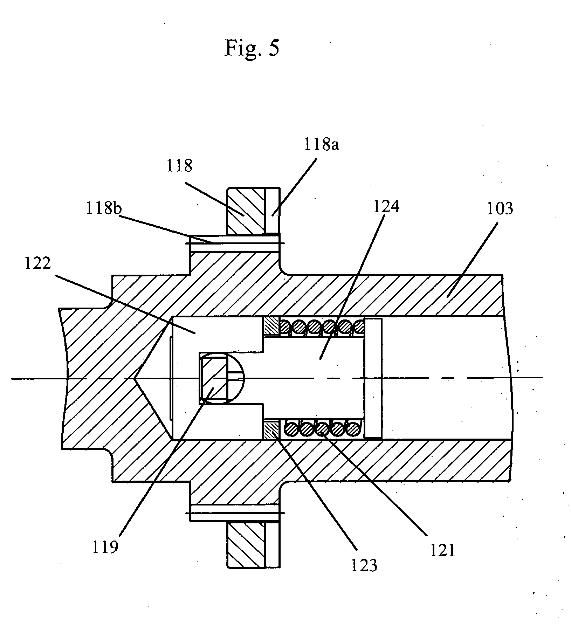

Da wie in Fig. 1 eine zweiteilige Hinterradwelle bestehend aus Antriebswelle 103 und Abtriebswelle 104, die miteinander verbunden sind, verwendet wird, steht für die Druckfeder 121 der Freilaufkupplung in Fig. 4 axial gesehen zwischen Druckplatte 119 und Schrägkugellager 109 kein ausreichender radialer Einbauraum innerhalb der Hinterradwelle zur Verfügung. Nach einem Merkmal der Erfindung wird die Druckfeder 121 mit nachfolgend beschriebener Anordnung auf der zum Antreiber 103 gewandten Seite der Druckplatte 119 angeordnet. In Fig. 5 sind die nachfolgend beschriebenen Elemente der Freilaufkupplung in der teilgeschnittenen Ansicht II-II aus Fig. 4 dargestellt. Eine Druckhülse 122 mit zwei Schenkeln, die sich in der Antriebswelle 103 abstützt, hält eine Unterlegscheibe 123 auf Distanz zur Druckplatte 119. An der Unterlegscheibe 123 stützt sich die Druckfeder 121 ab, die wiederum eine axiale Kraft auf eine Führungsbuchse 124 ausübt. Die Führungsbuchse 124 weist eine durchgehende Ausnehmung, vorzugsweise eine Bohrung auf, in der die Druckplatte 119 Platz findet. Die Führungsbuchse 124 leitet die Druckkraft der Druckfeder 121 radial gesehen innerhalb der Druckfeder 121 und innerhalb der Druckhülse 122 wieder auf die axial gesehen andere Seite der Druckplatte 119. Über die Bohrung der Führungsbuchse 124 wird die Druckplatte 119 schließlich gegen das Kupplungsglied 118 gedrückt. Im Freilauffall drücken die Stirnzähne 102b des Antreibers 102 die Stirnzähne 118a des Kupplungsgliedes 118 aus der Stirnzahn-Verbindung. In diesem Fall wird die Druckfeder 121 durch die Führungsbuchse 124 gegen die Unterlegscheibe 123 gedrückt, die sich an der Druckhülse 122 und an der Antriebswelle 103 abstützt. Die Ausführung der Freilaufkupplung mit den oben beschriebenen Merkmalen ermöglicht eine besonders platzsparende Freilaufkupplung, die hohe Drehmomente übertragen kann. Statt einer antriebswellenseitig vorhandenen Anlageschulter für das Schrägkugellager 109 dient eine Unterlegscheibe 125 als Anlageschulter für das Schrägkugellager 109. Nach einem Merkmal der Erfindung weist die Lagerbuchse 107 eine Bohrung 107a, die mit einem Stopfen, einer Schraube oder ähnlichem verschließbar ist, auf, die es ermöglicht, die Druckplatte 119 und damit die gesamte Freilaufkupplung ein- und auszubauen, ohne dass Fahrradrahmen, Lagerbuchse 107, Schrägkugellager 109, Antriebswelle 103 und Abtriebswelle 104 voneinander gelöst werden müssen. Damit kann die Antriebswelle 103 auch stoffschlüssig, beispielsweise durch Verlöten, mit der Abtriebswelle 104 verbunden werden. Auch diese Ausführungsform ist von der Erfindung umfasst.
c. Der Antreiber 102 ist radial gesehen innen durch einen Nadelkranz 105 auf der Antriebswelle 103 der Hinterradwelle gelagert. Der Nadelkranz 105 nimmt die bei Blockade des Hinterrades 111 über die Pedale auf das Antriebs-Kettenrad, die Kette und schließlich auf den Abtriebs-Zahnkranz 102a und den Antreiber 102 wirkenden gewichtsbedingten Lasten des Fahrradfahrers auf. Ein außen liegendes Lager 126 dient nun lediglich der axialen Fixierung des Antreibers 102 und kann daher mit einem besonders kleinen Außendurchmesser ausgeführt werden. Radial gesehen innen ist das Lager 126 auf einer in die Antriebswelle 103 eingeschraubten Fixierungsschraube 114 gelagert. Die radiale Positionierung des Lagers 126 sollte in Spielpassung zwischen Fixierungsschraube 114 und Antriebswelle 103 erfolgen. Ebenso können radial gesehen zwischen Fixierungsschraube 114 und Lager 126 und/oder zwischen Lager 126 und Antreiber 102 zusätzliche Dichtungselemente vorgesehen werden.
d. Bedingt durch die Verwendung des Nadelkranzes 105 zur Lagerung des Antreibers 102 und bedingt durch den kleinen Außendurchmesser des Lagers 126 weist der Abtriebs-Zahnkranz lediglich sieben Zähne auf.

Fig. 5 zeigt die teilgeschnittene Ansicht II-II der Freilaufkupplung aus Fig. 4 mit der Druckplatte 119, der innerhalb der Antriebswelle 103 angeordneten Druckfeder 121, der Druckhülse 122 und der Führungsbuchse 124.

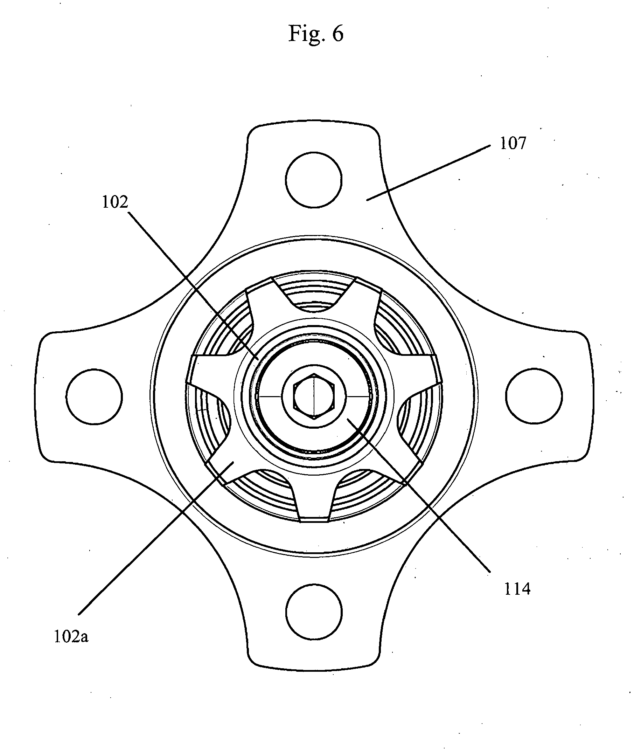

Fig. 6 stellt die entsprechende Seitenansicht des Hinterradantriebes aus Fig. 4 dar mit dem den Abtriebs-Zahnkranz 102a mit sieben Zähnen aufweisenden Antreiber 102.

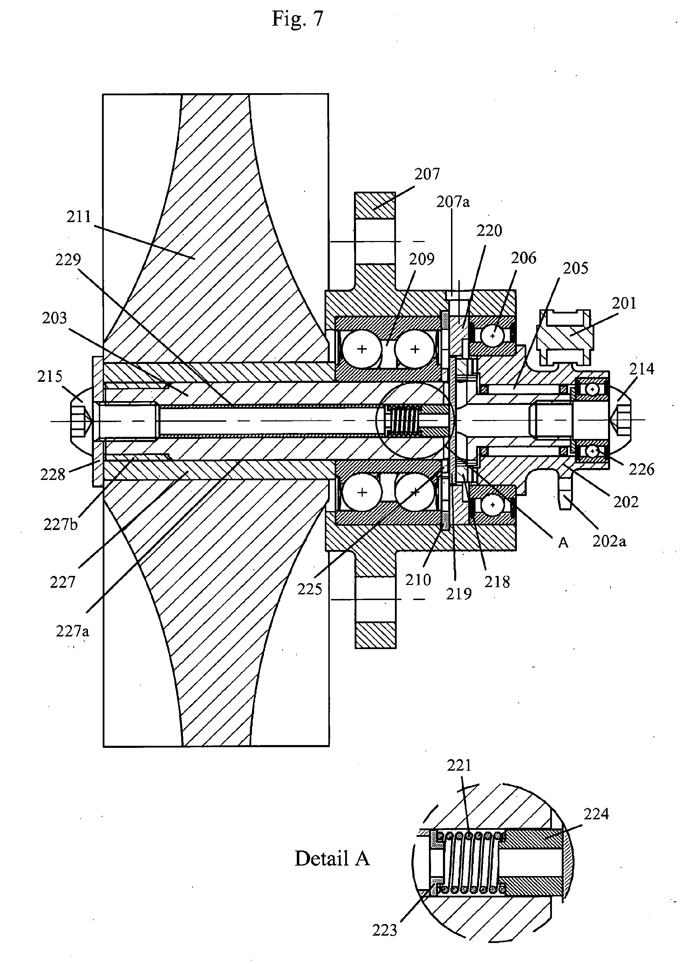

Fig. 7 zeigt ein drittes Ausführungsbeispiel des Hinterradantriebes.

Aus Gründen der Übersichtlichkeit wurden die zu Fig. 4 beschriebenen und in Fig. 7 mit entsprechender Funktion vertretenen Teile des Hinterradantriebes in Fig. 7 mit einer im Vergleich zu Fig. 4 um 100 erhöhten Ziffer bezeichnet. Sofern nachfolgend nicht abweichend beschrieben, ist die Beschreibung der Teile in Fig. 1 beziehungsweise Fig. 4 für die entsprechenden Teile in Fig. 7 zu übertragen.

Im Vergleich zu Figur 4 sind folgende Merkmale modifiziert:
a. Die Hinterradwelle 203 ist ungeteilt ausgeführt. Der Innendurchmesser des Schrägkugellagers 209 ist wenigstens so groß wie der Sitz des Hinterrades 211 auf der Hinterradwelle 203, um den Ein- und Ausbau des Schrägkugellagers 209 zu ermöglichen.
b. Das Hinterrad wird mittels einer als Hinterradnabe ausgebildeten Gewindehülse 227 mit der Hinterradwelle 203 befestigt. Axial gesehen zwischen Schrägkugellager 209 und Evolventenverzahnung der Hinterradwelle 203 dient die Unterlegscheibe 225, die auch als Sicherungsring ausgeführt werden kann, als wellenseitige Anlageschulter für das Schrägkugellager 209. Das Hinterrad 211, das radial gesehen innen die Gewindehülse 227 aufweist, ist auf die Hinterradwelle 203 aufgeschraubt und drückt das Schrägkugellager 209 zum Zweck der axialen Fixierung des Schrägkugellagers 209 auf der Hinterradwelle 203 gegen die Unterlegscheibe 225. Durch geeignete Passungswahl ist ein Passungsabschnitt 227a der Gewindehülse 227 über eine feste Passung fest mit der Hinterradwelle 203 verbunden und trägt die gewichts- und fahrbahnbedingten Lasten. Die Drehmomentübertragung zwischen Hinterradwelle 203 und Hinterrad 211 erfolgt im Wesentlichen über den Gewindeabschnitt 227b der Gewindehülse 227. Die das Hinterrad 211 tragende Gewindehülse 227 wird mit Hilfe einer Schraube 215 und einer Unterlegscheibe 228 verkontert.
c. Die das Kupplungsglied 218 zum Antreiber 202 hin verschiebende Druckfeder 221 ist auf der zum Hinterrad 211 weisenden Seite der Druckplatte 219 angeordnet. Aufgrund der einteiligen Ausführung der Hinterradwelle 203 entsteht innerhalb der Hinterradwelle 203 Raum zur Anordnung der Druckfeder 221 auf der zum Schrägkugellager 209 weisenden Seite der Druckplatte 219. Die Druckfeder 221 drückt die Führungsbuchse 224 gegen die Druckplatte 219 und diese gegen das Kupplungsglied 218 und den Antreiber 202. Die Druckfeder 221 stützt sich über die Unterlegscheibe 223 und ein Führungsrohr 229 an der Schraube 215 ab.
d. Der Antreiber 202 weist einen Abtriebs-Zahnkranz 202a mit lediglich sechs Zähnen auf. Im Vergleich zu dem Ausführungsbeispiel aus Fig. 4 ist in dem in Fig. 7 dargestellten Ausführungsbeispiel nochmals ein kleinerer Nadelkranz 205 mit dem Innendurchmesser 8 mm und dem Außendurchmesser 11 mm zur Lagerung des Antreibers 202 auf der Hinterradwelle 203 ausgeführt. Ebenso ist das Lager 226 kleiner und zwar mit einem Innendurchmesser von 6 mm und einem Außendurchmesser von 13 mm ausgeführt. Dieses Ausführungsbeispiel ermöglicht damit die Verwirklichung eines einen Abtriebs-Zahnkranz 202a mit lediglich sechs Zähnen aufweisenden Antreibers 202.
e. Aufgrund der mit einem Abtriebs-Zahnkranz 202a mit sechs Zähnen erreichbaren kleinen Übersetzung des Kettentriebes wird sogar ein lediglich 10 Zoll großes Vollkunststoff-Laufrad verwendet. Selbst der Einsatz eines 8 Zoll großen Laufrades wäre bei ausreichend großem Antriebskettenrad möglich.

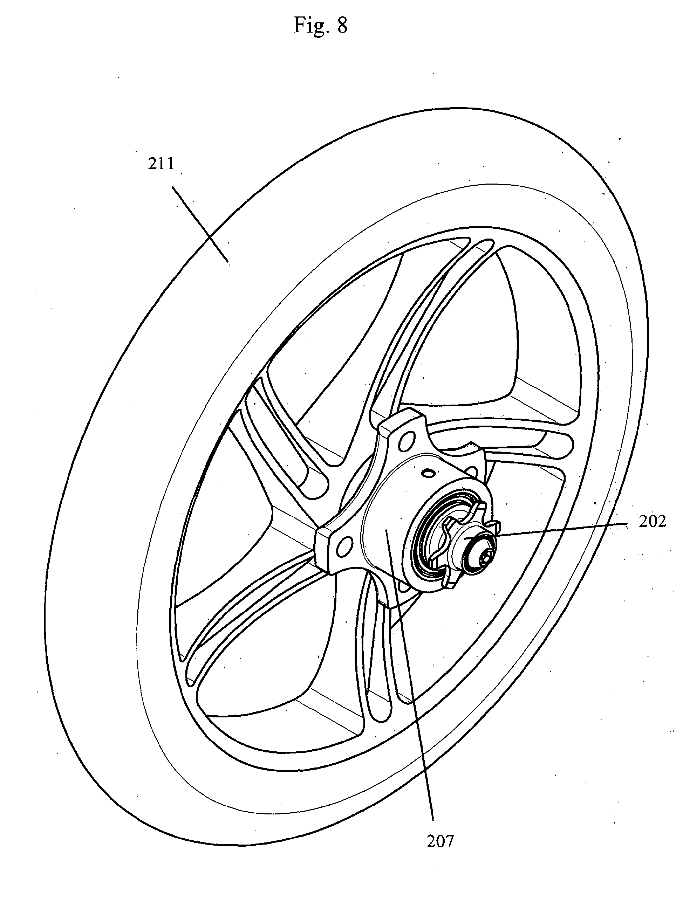

Fig. 8 zeigt eine Ansicht des Hinterradantriebes aus Fig. 7 mit dem sechs Zähne aufweisenden Abtriebs-Zahnkranz 202a.

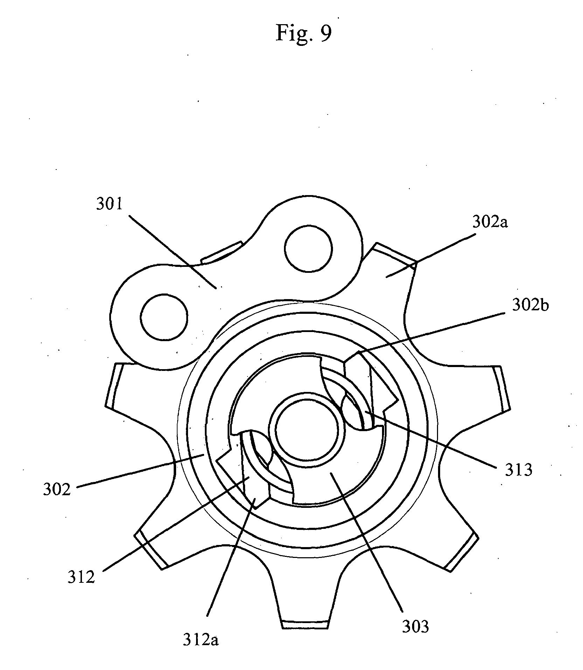

Fig. 9 zeigt in der Seitenansicht eine vierte Ausführungsform des Hinterradantriebes mit einer Sperrklinken-Freilaufkupplung, wobei der Abtriebs-Zahnkranz 302a lediglich sieben Zähne aufweist. Um erhöhten Festigkeitsanforderungen zu genügen, entspricht die Breite der Sperrklinke 312 in diesem Fall der gesamten zwischen den beiden den Antreiber 302 lagernden Lagern zur Verfügung stehenden Länge der Hinterradwelle 303. Darüber hinaus zeigt Fig. 9 eine weitere Ausführungsform der Sperrklinken 312 für den Sperrklinkenfreilauf. Die Sperrklinke 312 hat eine abgeflachte, rechtwinklige Spitze 312a, die in eine nabenseitige rechteckige Ausnehmung 302b des Antreibers 302 eingreift. Die Wahl der Durchmesser ermöglicht auch für diese Ausführungsform die Verwendung eines Abtriebs-Zahnkranzes 302a mit lediglich 7 Zähnen.

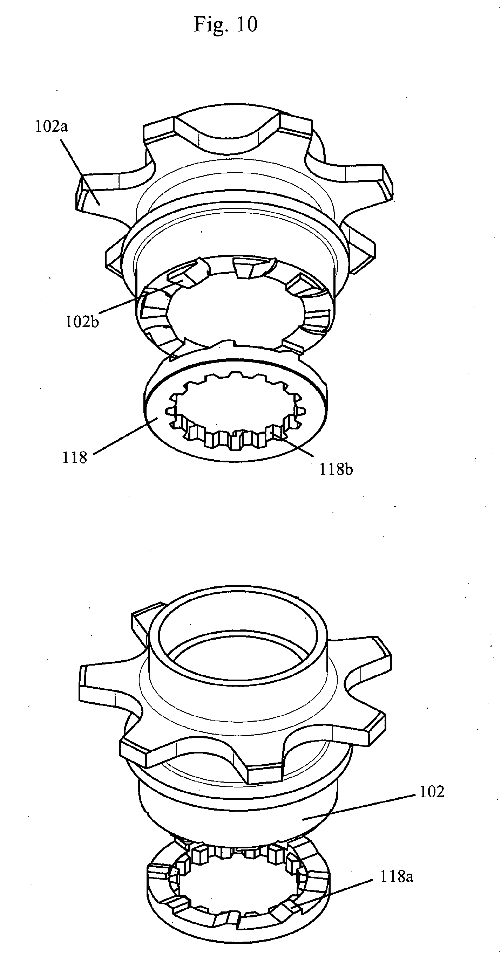

Fig. 10 bis Fig. 12 zeigen weitere, mögliche Ausführungsformen der Stirnverzahnung von Kupplungsglied 118 und Antreiber 102 für die Ausführungsbeispiele aus Fig. 4 und Fig. 7 in der Explosionsansicht, wobei die Bezeichnungen Bezug nehmen auf Fig. 4.

Fig. 10 zeigt eine Ausführungsform, in der das Kupplungsglied 118 und der Antreiber 102 jeweils eine achtzähnige, fräsbare Stirnverzahnung aufweisen.

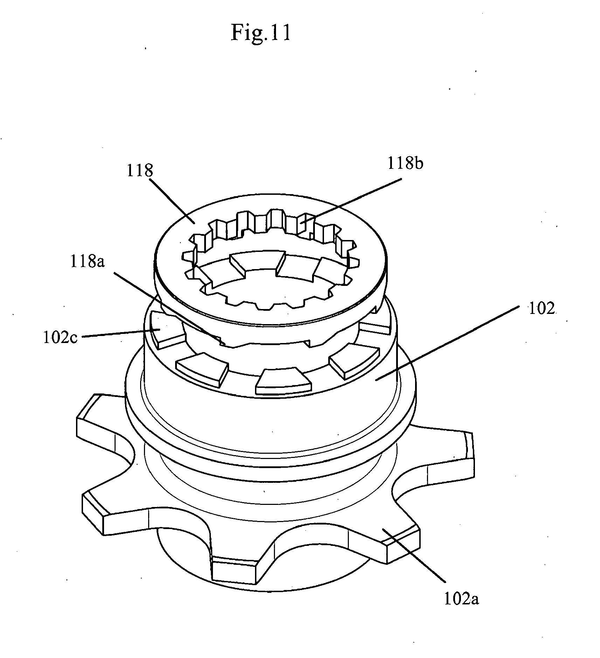

In Fig. 11 weist nur ein Kupplungspartner, hier das Kupplungsglied 118, die acht fräsbaren Stirnzähne 118a auf, während der andere Kupplungspartner, hier der Antreiber 102, fräsbare Klauen 102c aufweist, in die die Stirnzähne 118a des Kupplungsgliedes 118 eingreifen.

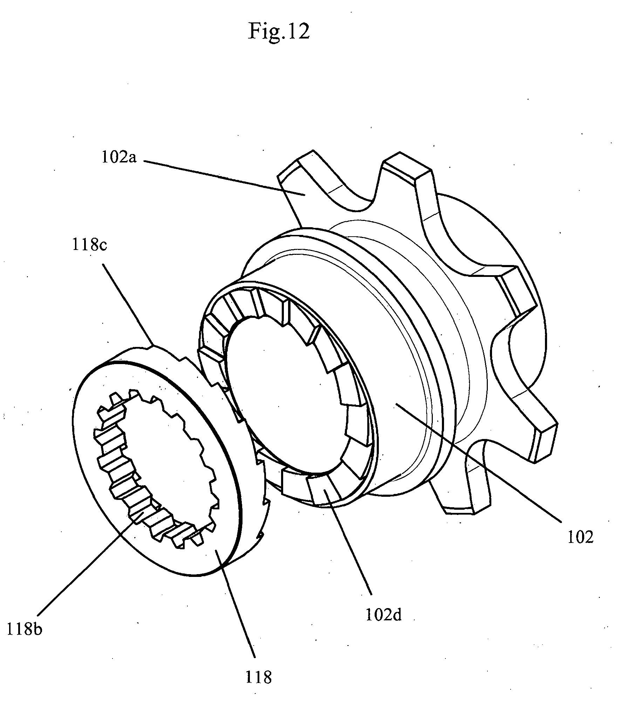

In Fig. 12 weisen beide Kupplungspartner, Kupplungsglied 118 und Antreiber 102, eine modifizierte Stirnverzahnung mit gleichmäßig am Umfang aneinandergereihten Stirnzähnen 118c und 102d auf, die ineinander greifen.

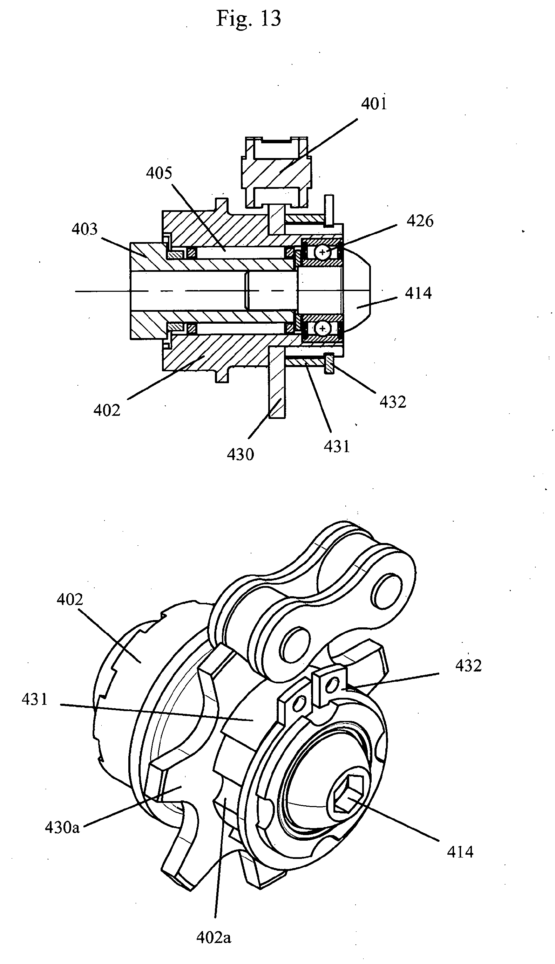

Fig. 13 zeigt eine Schnittansicht und eine Ansicht eines Antreibers 402, auf dem drehfest, aber lösbar ein Abtriebs-Zahnkranz 430 mit lediglich sieben Zähnen 430a befestigt werden kann. Dabei wird zur axialen Fixierung des Antreibers 402 ein Rillenkugellager 426 mit 13 mm Außendurchmesser eingesetzt. Die radialen Lasten nimmt ein Nadelkranz 405 mit 11 mm Außendurchmesser auf. Der Abtriebs-Zahnkranz 430 ist axial gesehen zum Fahrradrahmen gegen eine Anlageschulter des Antreibers 402 festgelegt, während die axiale Fixierung von außen über eine Distanzhülse 431 durch einen Sicherungsring 432 erfolgt. Das Drehmoment wird, wie für Abtriebs-Zahnkränze hinlänglich bekannt, von dem Abtriebs-Zahnkranz 430 über eine runde Ausnehmung 402a auf den Antreiber 402 übertragen. Ebenso sind auch alle anderen Ausführungsformen der lösbaren Verbindung zwischen Abtriebs-Zahnkranz 430 und Antreiber 402 von der Erfindung umfasst, werden hier jedoch nicht gesondert ausgeführt. Abschließend wird wiederum auch in diesem Ausführungsbeispiel deutlich, dass aufgrund der Merkmale der Erfindung kleinstmögliche Abtriebs-Zahnkränze 2a, 2b, 102a, 202a, 302a, 430 für den Kettentrieb des Fahrrades verwirklicht werden können.

In allen vorstehend beschriebenen Ausführungsbeispielen ist es ebenso möglich und von der Erfindung umfasst, auch Abtriebs-Zahnkränze mit mehr als den im jeweiligen Ausführungsbeispiel genannten Zähnen zu verwirklichen.

Mit den vorgenannten Ausführungsformen lassen sich die im Folgenden beispielhaft näher beschriebenen Übersetzungsverhältnisse verwirklichen.

Da die resultierenden Übersetzungen sehr kleine Zahlen ergeben, ist die Darstellung der Übersetzungsverhältnisse in der Form eines vorangestellten Verhältnisses "1 :" gewählt worden. In der jeweiligen Zeile für die dargestellte Übersetzung des jeweiligen Kettentriebes findet sich dann der Divisor des Übersetzungsverhältnisses von 1: . Eine Übersetzung von 0,125 wird beispielsweise dargestellt als = 1 : 8.

**Tabelle A: Beispielhafte Übersetzungsverhältnisse für kleine Laufräder**

| Laufradgröße in Zoll | Zähnezahl Antriebskettenrad | Zähnezahl Abtriebs-Zahnkranz | Übersetzung = 1: | Entfaltung in m/Kurbelumdrehung |
|---|---|---|---|---|
| 8 | 48 | 6 | 8,00 | 5,3 |
| 8 | 48 | 7 | 6,86 | 4,6 |
| 10 | 40 | 6 | 6,67 | 5,3 |
| 10 | 40 | 7 | 5,71 | 4,6 |
| 12 | 36 | 6 | 6,00 | 5,4 |
| 12 | 36 | 7 | 5,14 | 4,6 |
| 10 | 52 | 8 | 6,50 | 5,2 |
| 10 | 52 | 9 | 5,78 | 4,6 |
| 12 | 48 | 8 | 6,00 | 5,4 |
| 12 | 48 | 9 | 5,33 | 4,8 |
| 14 | 40 | 8 | 5,00 | 5,4 |
| 14 | 40 | 9 | 4,44 | 4,8 |
| 16 | 36 | 8 | 4,50 | 5,4 |
| 16 | 36 | 9 | 4,00 | 4,8 |
| | | | | |
| 10 | 48 | 7 | 6,86 | 5,5 |
| 12 | 48 | 8 | 6,00 | 5,4 |
| 14 | 48 | 10 | 4,80 | 5,1 |
| 16 | 48 | 11 | 4,36 | 5,2 |

Die vorstehende Tabelle verdeutlicht im oberen Teil die Vorteile der Ausführungsform aus Fig. 1 mit mehreren Abtriebs-Zahnkränzen. Der verwendete Abtriebs-Zahnkranz 2a, 2b kann durch einfache Änderung der Positionierung der Kette (z. B. in Fig. 1 auf dem Abtriebs-Zahnkranz 2a mit acht beziehungsweise 2b mit neun Zähnen) gewählt werden, so dass die gewünschte Entfaltung für das Fahrrad einstellbar ist. Darüber hinaus verdeutlicht die vorstehende Tabelle, dass derselbe Hinterradantrieb bei gleicher erzielbarer Entfaltung auf alle Laufradgrößen von 10 Zoll bis 16 Zoll angepasst werden kann, indem einfach ein anderes handelsübliches Antriebskettenrad verwendet wird. Damit ist derselbe Hinterradantrieb für eine Vielzahl möglicher Ausführungsformen von Fahrrädern (mit Vollkunststoff-Laufrädern, mit luftgefüllten Laufrädern und so weiter) einsetzbar.

Im unteren Teil zeigt die vorstehende Tabelle, dass der Hinterradantrieb und dasselbe Antriebs-Kettenrad bei gleicher erzielbarer Entfaltung für unterschiedliche Laufradgrößen von 10 Zoll bis 16 Zoll verwendet werden kann, indem einfach der in dem Ausführungsbeispiel aus Fig. 13 lösbar gestaltete Abtriebs-Zahnkranz gewechselt wird.

Beispielhaft ist im Folgenden eine mögliche Ausführung als Mehrgangkettenschaltung mit 6 Gangstufen dargestellt, wobei der Hinterradantrieb über die in Fig. 1 dargestellten zwei Abtriebs-Zahnkränze verfügt. Nach einem besonderen Merkmal der Erfindung wird die Mehrgangkettenschaltung mit einem handelsüblichen Antriebskettenrad mit den Zähnezahlen 42-32-24 verwirklicht, da damit ähnlich große Stufensprünge zwischen den Gangstufen erreicht werden:

**Tabelle B: Sechs-Gang-Getriebe für 16-Zoll-Rad**

| Laufradgröße in Zoll | Gangstufe | Zähnezahl Antriebskettenrad | Zähnezahl Abtriebs-Zahnkranz | Übersetzung = 1: | Entfaltung in m/Kurbelumdrehung | Stufensprung |
|---|---|---|---|---|---|---|
| 16 | 1 | 24 | 9 | 2,67 | 3,2 | |
| 16 | 2 | 24 | 8 | 3,00 | 3,6 | 12,5% |
| 16 | 3 | 32 | 9 | 3,56 | 4,3 | 18,5% |
| 16 | 4 | 32 | 8 | 4,00 | 4,8 | 12,5% |
| 16 | 5 | 42 | 9 | 4,67 | 5,6 | 16,7% |
| 16 | 6 | 42 | 8 | 5,25 | 6,3 | 12,5% |

Wenn eine Technologie verfügbar ist, die in der Lage ist, auch besonderes kleine Zähnezahlen der Abtriebs-Zahnkränze zu schalten, sind im Folgenden weitere mögliche Ausführungen als Mehrgangschaltung mit sechs Gangstufen und einer gleichmäßigen Gangabstufung für die Laufradgrößen 14 Zoll und 12 Zoll beispielhaft dargestellt. Auch in diesem Fall verfügt der Hinterradantrieb über zwei Abtriebs-Zahnkränze:

**Tabelle C: Sechs-Gang-Getriebe für 14-Zoll-Rad und für 12-Zoll-Rad**

| Laufradgröße in Zoll | Gangstufe | Zähnezahl Antriebskettenrad | Zähnezahl Abtriebs-Zahnkranz | Übersetzung = 1: | Entfaltung in m/Kurbelumdrehung | Stufensprung |
|---|---|---|---|---|---|---|
| 14 | 1 | 24 | 8 | 3,00 | 3,2 | |
| 14 | 2 | 24 | 7 | 3,43 | 3,7 | 14,3% |
| 14 | 3 | 32 | 8 | 4,00 | 4,3 | 16,7% |
| 14 | 4 | 32 | 7 | 4,57 | 4,9 | 14,3% |
| 14 | 5 | 42 | 8 | 5,25 | 5,6 | 14,8% |
| 14 | 6 | 42 | 7 | 6,00 | 6,4 | 14,3% |
| | | | | | | |
| 12 | 1 | 24 | 7 | 3,43 | 3,09 | |
| 12 | 2 | 24 | 6 | 4,00 | 3,60 | 16,7% |
| 12 | 3 | 32 | 7 | 4,57 | 4,11 | 14,3% |
| 12 | 4 | 32 | 6 | 5,33 | 4,80 | 16,7% |
| 12 | 5 | 42 | 7 | 6,00 | 5,40 | 12,5% |
| 12 | 6 | 42 | 6 | 7,00 | 6,30 | 16,7% |

Daneben sind mit den zuvor beschriebenen Merkmalen der Erfindung beziehungsweise mit den nachfolgend beanspruchten Merkmalen der Erfindung eine Vielzahl weiterer Übersetzungsverhältnisse realisierbar, die alle von der Erfindung umfasst sind.

Alle nachfolgend in den Patentansprüchen genannten Zähnezahlen von Abtriebs-Zahnkränzen und Antriebskettenrädern beziehen sich auf die für Fahrradketten übliche Kettenteilung von 12,7 mm. Für Ausführungsformen mit davon abweichenden Kettenteilungen werden in den jeweiligen Ansprüchen diejenigen Zähnezahlen beansprucht, die sich aus dem gerundeten Ergebnis der Multiplikation der nachfolgend jeweils bezifferten Zähnezahlen mit dem Quotienten aus 12,7 mm geteilt durch die abweichende Kettenteilung ergeben.

## Patentansprüche

1. Hinterradantrieb,
wahlweise für Fahrräder öder für Anhängefahrräder,
enthaltend:
a. wenigstens einen Abtriebs-Zahnkranz (2a, 2b, 102a, 202a, 302a, 430) eines Kettentriebes,
b. eine Hinterradwelle (3, 4; 103, 104; 203, 303, 403),
c. einen mit dem Abtriebs-Zahnkranz (2a, 2b; 102a, 202a, 302a, 430) drehfest verbundenen Antreiber (2, 102, 202, 302, 402), wobei der Antreiber (2, 102, 202, 302, 402) direkt oder mittelbar auf der Hinterradwelle (3, 4; 103, 104; 203, 303, 403) gelagert ist,
d. mindestens ein die Hinterradwelle (3, 4; 103, 104; 203, 303, 403) zum Fahrradrahmen (8) lagerndes Lager (9, 109, 209), das axial gesehen zwischen dem Abtriebs-Zahnkranz (2a, 2b, 102a, 202a) und dem Sitz des Hinterrades (11, 211) angeordnet ist und radial gesehen innen die Hinterradwelle (3, 4; 103, 104; 203, 303, 403) lagert und radial gesehen außen - direkt oder mittelbar - mit einem Fahrradrahmen (8) verbunden ist,
wobei die Hinterradwelle (3, 4; 103, 104; 203, 303, 403) axial gesehen nur auf einer Seite des Antreibers (2, 102, 202, 302, 402) tragend zum Fahrradrahmen (8) gelagert ist und wobei im Kraftfluss gesehen zwischen dem Antreiber (2, 102, 202, 302, 402) und der Hinterradwelle (3, 4; 103, 104; 203, 303, 403) eine das Drehmoment des Antreibers (2, 102, 202, 302, 402) direkt auf die Hinterradwelle (3, 4; 103, 104) übertragende Freilaufkupplung angeordnet ist,
**dadurch gekennzeichnet, dass** der Antreiber (2, 102, 202) durch zwei Lager (5, 6; 105, 106; 205, 206) gelagert ist, wobei ein Lager (6, 106, 206) den Antreiber (2, 102, 202) radial gesehen innen lagert und radial gesehen außen direkt oder mittelbar mit dem Fahrradrahmen (8) verbunden ist und ein Lager (5, 105, 205) den Antreiber (2, 102, 202) radial gesehen außen lagert und radial gesehen innen auf der Hinterradwelle (203) oder auf einer in die Hinterradwelle eingeschraubten Schraube gelagert ist.

2. Hinterradantrieb nach Anspruch 1, **dadurch gekennzeichnet, dass** die Hinterradwelle (3, 4; 103, 104) wenigstens aus einer Antriebswelle (3, 103) und einer Abtriebswelle (4, 104) besteht.

3. Hinterradantrieb nach Anspruch 2, **dadurch gekennzeichnet, dass** das Lager (9, 109, 209), das axial gesehen zwischen dem Antreiber (2, 102, 202) und dem Sitz des Hinterrades (11, 211) angeordnet ist und radial gesehen innen die Hinterradwelle (203) lagert, und das Lager (6, 106, 206), das den Antreiber (2, 102, 202) radial gesehen innen lagert, radial gesehen außen in derselben Lagerbuchse (7, 107, 207) geführt sind, die wiederum mit dem Fahrradrahmen (8) verbunden ist.

4. Hinterradantrieb nach einem der Ansprüche 1 bis 3, **dadurch gekennzeichnet, dass** die Freilaufkupplung ein Sperrklinkenfreilauf ist, bestehend aus wenigstens einer in einer halbrunden Ausnehmung der Hinterradwelle (303) angeordneten, drehbar beweglichen Sperrklinke (12, 312) und einer die Sperrklinke (12, 312) aufrichtenden Ringfeder (13, 313), wobei die Hinterradwelle (303) zur Aufnahme der Sperrklinken (12, 312) von der Stirnseite der Hinterradwelle (303) aus fräsbare Ausnehmungen (3b, 3c) aufweist.

5. Hinterradantrieb nach Anspruch 4, **dadurch gekennzeichnet, dass** das axial gesehen außen angeordnete, den Antreiber (2, 302) auf der Hinterradwelle (303) lagernde Lager (5) einen kleineren Innendurchmesser aufweist als der Innenkreis der Ausnehmungen (3b, 3c) zur Aufnahme der Sperrklinken (12, 312) auf der Hinterradwelle (303).

6. Hinterradantrieb nach einem der Ansprüche 1 bis 3, **dadurch gekennzeichnet, dass** die Freilaufkupplung ein mit der Hinterradwelle (203) drehfest wirkverbundenes Kupplungsglied (118, 218) aufweist, das auf der Hinterradwelle (203) axial verschieblich ist.

7. Hinterradantrieb nach Anspruch 6, **dadurch gekennzeichnet, dass** das Kupplungsglied (118, 218) an der zum Antreiber (102, 202) gewandten Stirnseite gleichmäßig am Umfang verteilte Stirnzähne (118a) aufweist.

8. Hinterradantrieb nach Anspruch 6 oder 7 , **dadurch gekennzeichnet, dass** das Kupplungsglied (118, 218) mit der Hinterradwelle (203) über eine Evolventenverzahnung (118b) drehfest wirkverbunden ist.

9. Hinterradantrieb nach Anspruch 8, **dadurch gekennzeichnet, dass** das Kupplungsglied (118, 218) mit der Hinterradwelle (203) über eine 16zähnige Evolventenverzahnung (118b) des Moduls 0,8 drehfest wirkverbunden ist.

10. Hinterradantrieb nach einem der Ansprüche 6 bis 9, **dadurch gekennzeichnet, dass** ein die Hinterradwelle (203) rechtwinklig zu deren Längsachse durchdringendes, in einer entsprechenden Ausnehmung der Hinterradwelle (203) angeordnetes, von einer innerhalb eines hohlzylindrischen Teils der Hinterradwelle (203) angeordneten Druckfeder (121, 221) axial bewegtes Druckstück (119, 219) das Kupplungsglied (118, 218) radial gesehen außerhalb der Hinterradwelle (203) und zum Antreiber (2, 202) verschiebt.

11. Hinterradantrieb nach Anspruch 10, **dadurch gekennzeichnet, dass** die Ausnehmung in der Hinterradwelle (203) eine durchgehende Bohrung ist.

12. Hinterradantrieb nach Anspruch 10 oder 11, **dadurch gekennzeichnet, dass** das Druckstück (119, 219) durch eine Scheibe (120, 220), die axial gesehen zwischen dem Lager (109, 209), das die Hinterradwelle (203) zum Fahrradrahmen lagert und dem Lager (106, 206), das den Antreiber (102, 202) radial gesehen innen lagert, in seiner radialen Position gehalten wird.

13. Hinterradantrieb nach einem der Ansprüche 10 bis 12, **dadurch gekennzeichnet, dass** innerhalb eines hohlzylindrischen Teils der Antriebswelle (103) der Hinterradwelle (103, 104) eine Druckhülse (122) mit zwei an beiden Seiten des Druckstückes (119) verlaufenden Schenkeln angeordnet ist, die sich axial gesehen in der Antriebswelle (103) der Hinterradwelle (103, 104) zum Hinterrad hin abstützt und die die Druckfeder (121) auf Distanz zur zum Antreiber (102) gewandten Seite des Druckstückes (119) hält, wobei die Druckfeder (121) eine innerhalb der Hinterradwelle (103, 104) angeordnete Führungsbuchse (124) axial verschiebt, die zur Führung des Druckstückes (119) Ausnehmungen aufweist und das Druckstück (119) gegen das Kupplungsglied (118) drückt und dieses zum Antreiber (102) verschiebt.

14. Hinterradantrieb nach einem der Ansprüche 10 bis 13, **dadurch gekennzeichnet, dass** der Fahrradrahmen, die Lagerbuchse (107), die Hinterradwelle (103, 104) und das Lager (109) miteinander verbunden sind, während das Druckstück (119) montiert oder demontiert werden kann.

15. Hinterradantrieb nach einem der Ansprüche 2 bis 14, **dadurch gekennzeichnet, dass** die Antriebswelle (3, 103) und die Abtriebswelle (4, 104) der zweiteiligen Hinterradwelle (3, 4; 103, 104) Außendurchmesser aufweisen, die größer sind als der auf der Abtriebswelle (4, 104) der Hinterradwelle (3, 4; 103, 104) angeordnete Lagersitz des die Hinterradwelle (3, 4; 103, 104) im Fahrradrahmen (8) lagernden Lagers (9, 109).

16. Hinterradantrieb nach Anspruch 15, **dadurch gekennzeichnet, dass** die Abtriebswelle (4, 104) der Hinterradwelle (3, 4; 103, 104) an ihrem zum Hinterrad (11) zeigenden Ende als Hinterradflansch ausgebildet ist, an dem das Hinterrad (11) befestigt werden kann.

## Claims

1. A rear-wheel drive,
optionally for bicycles or for trailer bicycles,
containing:
a. at least one output sprocket (2a, 2b, 102a, 202a, 302a, 430) of a chain drive,
b. a rear-wheel shaft (3, 4; 103, 104; 203, 303, 403),
c. a driving mechanism (2, 102, 202, 302, 402), co-rotatingly connected with the output sprocket (2a, 2b; 102a, 202a, 302a, 430), the driving mechanism (2, 102, 202, 302, 402) being supported directly or indirectly on the rear-wheel shaft (3, 4; 103, 104; 203, 303, 403),
d. at least one bearing (9, 109, 209) that supports the rear-wheel shaft (3, 4; 103, 104; 203, 303, 403) relative to the bicycle frame (8) and that, seen axially, is arranged between the output sprocket (2a, 2b, 102a, 202a) and the seat of the rear wheel (11, 211) and, seen radially, supports the rear-wheel shaft (3, 4; 103, 104; 203, 303, 403) on the inside and, seen radially, is connected - directly or indirectly - to a bicycle frame (8),
the rear-wheel shaft (3, 4; 103, 104; 203, 303, 403), seen axially, being supported only on one side of the driving mechanism (2, 102, 202, 302, 402) in a supporting manner relative to the bicycle frame (8), and a freewheel clutch that transmits the torque of the driving mechanism (2, 102, 202, 302, 402) directly to the rear-wheel shaft (3, 4; 103, 104; 203, 303, 403) being arranged, seen in the power flow, between the driving mechanism (2, 102, 202, 302, 402) and the rear-wheel shaft (3, 4; 103, 104; 203, 303, 403),
**characterized in that** the driving mechanism (2, 102, 202) is supported by two bearings (5, 6; 105, 106; 205, 206), one bearing (6, 106, 206), seen radially, supports the driving mechanism (2, 102, 202) on the inside and, seen radially, is connected on the outside directly or indirectly to the bicycle frame (8) and a bearing (5, 105, 205), seen radially, supports the driving mechanism (2, 102, 202) on the outside and, seen radially, is supported on the inside on the rear-wheel shaft (203) or on a screw that is screwed into the rear-wheel shaft.

2. The rear-wheel drive according to Claim 1, **characterized in that** the rear-wheel shaft (3, 4; 103, 104) consists at least of one drive shaft (3, 103) and an output shaft (4, 104).

3. The rear-wheel drive according to Claim 2, **characterized in that** the bearing (9, 109, 209), that, seen axially, is arranged between the driving mechanism (2, 102, 202) and the seat of the rear wheel (11, 211) and, seen radially, supports the rear-wheel shaft (203) on the inside, and the bearing (6, 106, 206) that, seen radially, supports the driving mechanism (2, 102, 202) on the inside, are guided, seen radially, on the outside in the same bearing bushing (7, 107, 207), that in turn is connected to the bicycle frame (8).

4. The rear-wheel drive according to one of Claims 1 to 3, **characterized in that** the freewheel clutch is a pawl freewheel, consisting of at least one rotatable pawl (12, 312) that is arranged in a half-round recess of the rear-wheel shaft (303), and a circular spring (13, 313) that puts upright the pawl (12, 312), the rear-wheel shaft (303), in order to receive the pawls (12, 312), exhibits recesses (3b, 3c), that are end-facing millable from the end face of the rear-wheel shaft (303).

5. The rear-wheel drive according to Claim 4, **characterized in that** the bearing (5), that, seen axially, is arranged on the outside and supports the driving mechanism (2, 302) on the rear-wheel shaft (303), exhibits a smaller inside diameter than the inside circle of the recesses (3b, 3c) for receiving the pawls (12, 312) on the rear-wheel shaft (303).

6. The rear-wheel drive according to one of the Claims 1 to 3, **characterized in that** the freewheel clutch exhibits a clutch member (118, 218) that is operatively co-rotatingly connected with the rear-wheel shaft (203) and is displaceable axially on the rear-wheel shaft (203).

7. The rear-wheel drive according to Claim 6, **characterized in that** the clutch member (118, 218) exhibits, on the end face facing the driving mechanism (102, 202), end teeth (118a) that are uniformly distributed on the circumference.

8. The rear-wheel drive according to Claim 6 or 7, **characterized in that** the clutch member (118, 218) is operatively co-rotatingly connected with the rear-wheel shaft (203) by means of an involute gearing (118b).

9. The rear-wheel drive according to Claim 8, **characterized in that** the clutch member (118, 218) is operatively co-rotatingly connected with the rear-wheel shaft (203) by means of a 16-tooth involute gearing (118b) having the modulus 0.8.

10. The rear-wheel drive according to one of Claims 6 to 9, **characterized in that** a pressure piece (119, 219) that penetrates the rear-wheel shaft (203) at right angles to its longitudinal axis, is arranged in a corresponding recess of the rear-wheel shaft (203) and is moved axially by a pressure spring (121, 221) that is arranged inside a hollow-cylindrical part of the rear-wheel shaft (203), shifts the clutch member (118, 218), seen radially, outside the rear-wheel shaft (203) toward the driving mechanism (2, 202).

11. The rear-wheel drive according to Claim 10, **characterized in that** the recess in the rear-wheel shaft (203) is a continuous bore.

12. The rear-wheel drive according to Claim 10 or 11, **characterized in that** the pressure piece (119, 219) is held in its radial position by means of a disk (120, 220) that, seen axially, is supported between the bearing (109, 209) that supports the rear-wheel shaft (203) relative to the bicycle frame, and the bearing (106, 206) that, seen radially, supports the driving mechanism (102, 202) on the inside.

13. The rear-wheel drive according to one of Claims 10 to 12, **characterized in that** a pressure sleeve (122) having legs that run on both sides of the pressure piece (119) is arranged inside a hollow-cylindrical part of the drive shaft (103) of the rear-wheel shaft (103, 104) and that is supported, seen axially, in the drive shaft (103) of the rear-wheel shaft (103, 104) relative to the rear-wheel and that keeps the pressure spring (121) at a distance to the side of the pressure piece (119) facing the driving mechanism (102), the pressure spring (121) shifting axially a guide bushing (124) arranged inside the rear-wheel shaft (103, 104), that exhibits recesses for guiding the pressure piece (119) and presses the pressure piece (119) against the clutch member (118) and shifts it toward the driving mechanism (102).

14. The rear-wheel drive according to one of Claims 10 to 13, **characterized in that** the bicycle frame, the bearing bushing (107), the rear-wheel shaft (103, 104), and the bearing (109) are interconnected while the pressure piece (119) can be installed or removed.

15. The rear-wheel drive according to one of Claims 2 to 14, **characterized in that** the drive shaft (3, 103) and the output shaft (4, 104) of the two-part rear-wheel shaft (3, 4; 103, 104) exhibit outside diameters that are larger than the bearing seat, arranged on the drive shaft (4, 104) of the rear-wheel shaft (3, 4; 103, 104), of the bearing (9, 109) that supports the rear-wheel shaft (3, 4; 103, 104) in the bicycle frame (8).

16. The rear-wheel drive according to Claim 15, **characterized in that** the output shaft (4, 104) of the rear-wheel shaft (3, 4; 103, 104) is designed at its end facing the rear-wheel (11) as a rear-wheel flange to which the rear wheel (11) can be fastened.

## Revendications

1. Entraînement de roue arrière,
sélectivement pour des bicyclettes ou des vélos-suiveurs,
comprenant :
a. au moins une couronne dentée de sortie (2a, 2b, 102a, 202a, 302a, 430) d'une transmission à chaîne,
b. un arbre de roue arrière (3, 4 ; 103, 104 ; 203, 303, 403),
c. un élément d'entraînement (2, 102, 202, 302, 402) relié solidaire en rotation à la couronne dentée de sortie (2a, 2b ; 102a, 202a, 302a, 430), l'élément d'entraînement (2, 102, 202, 302, 402) étant directement ou indirectement monté sur l'arbre de roue arrière (3, 4 ; 103, 104 ; 203, 303, 403),
d. au moins un palier (9, 109, 209) logeant l'arbre de roue arrière (3, 4 ; 103, 104 ; 203, 303, 403) sur le cadre de bicyclette (8), le palier étant disposé, en vue axiale, entre la couronne dentée de sortie (2a, 2b, 102a, 202a) et le siège de la roue arrière (11, 211) et logeant à l'intérieur, en vue radiale, l'arbre de roue arrière (3, 4 ; 103, 104 ; 203, 303, 403) et étant relié à l'extérieur, en vue radiale, - directement ou indirectement - à un cadre de bicyclette (8),
l'arbre de roue arrière (3, 4 ; 103, 104 ; 203, 303, 403) étant monté, en vue axiale, seulement sur un côté porteur de l'élément d'entraînement (2, 102, 202, 302, 402) sur le cadre de bicyclette (8) et, vu dans le flux de force, entre l'élément d'entraînement (2, 102, 202, 302, 402) et l'arbre de roue arrière (3, 4 ; 103, 104 ; 203, 303, 403) un accouplement à roue libre transmettant le couple de rotation de l'élément d'entraînement (2, 102, 202, 302, 402) étant disposé directement sur l'arbre de roue arrière (3, 4 ; 103, 104),
**caractérisé par le fait que** l'élément d'entraînement (2, 102, 202) est monté au moyen de deux paliers (5, 6 ; 105, 106 ; 205, 206), un palier (6, 106, 206) logeant l'élément d'entraînement (2, 102, 202) à l'intérieur, en vue radiale, et étant relié à l'extérieur, en vue radiale, directement ou indirectement au cadre de bicyclette (8) et un palier (5, 105, 205) logeant l'élément d'entraînement (2, 102, 202) à l'extérieur, en vue radiale, et étant monté à l'intérieur, en vue radiale, sur l'arbre de roue arrière (203) ou sur une vis vissée dans l'arbre de roue arrière.

2. Entraînement de roue arrière selon la revendication 1, **caractérisé par le fait que** l'arbre de roue arrière (3, 4 ; 103, 104) est constitué d'au moins un arbre d'entraînement (3, 103) et un arbre de sortie (4, 104).

3. Entraînement de roue arrière selon la revendication 2, **caractérisé par le fait que** le palier (9, 109, 209), qui est disposé, en vue axiale, entre l'élément d'entraînement (2, 102, 202) et le logement de la roue arrière (11, 211) et loge à l'intérieur, en vue radiale, l'arbre de roue arrière (203), et le palier (6, 106, 206), qui loge l'élément d'entraînement (2, 102, 202), en vue radiale, à l'intérieur, sont guidés, en vue radiale, à l'extérieur dans le même coussinet de palier (7, 107, 207), qui est à son tour relié au cadre de bicyclette (8).

4. Entraînement de roue arrière selon l'une des revendications 1 à 3, **caractérisé par le fait que** l'accouplement à roue libre est une roue libre à cliquet de blocage, constitué d'au moins un cliquet de blocage (12, 312) disposé mobile en rotation dans un évidement semi-circulaire de l'arbre de roue arrière (303) et un ressort annulaire (13, 313) de redressement du cliquet de blocage (12, 312), l'arbre de roue arrière (303) présentant des évidements fraisables (3b, 3c) pour la réception des cliquets de blocage (12, 312) depuis la face frontale de l'arbre de roue arrière (303).

5. Entraînement de roue arrière selon la revendication 4, **caractérisé par le fait que** le palier (5) disposé à l'extérieur, en vue axiale, logeant l'élément d'entraînement (2, 302) sur l'arbre de roue arrière (303) présente un diamètre intérieur plus petit que le cercle intérieur des évidements (3b, 3c) pour la réception des cliquets de blocage (12, 312) sur l'arbre de roue arrière (303).

6. Entraînement de roue arrière selon l'une des revendications 1 à 3, **caractérisé par le fait que** l'accouplement à roue libre (118, 218) présente un organe d'accouplement solidaire en rotation avec l'arbre de roue arrière (203), qui peut se déplacer axialement sur l'arbre de roue arrière (203).

7. Entraînement de roue arrière selon la revendication 6, **caractérisé par le fait que** l'organe d'accouplement (118, 218) présente des dents frontales (118a) réparties régulièrement sur la circonférence au niveau de la face frontale faisant face à l'élément d'entraînement (102, 202).

8. Entraînement de roue arrière selon la revendication 6 ou 7, **caractérisé par le fait que** l'organe d'accouplement (118, 218) est solidaire en rotation avec l'arbre de roue arrière (203) par l'intermédiaire d'un engrenage à développante (118b).

9. Entraînement de roue arrière selon la revendication 8, **caractérisé par le fait que** l'organe d'accouplement (118, 218) est solidaire en rotation avec l'arbre de roue arrière (203) par l'intermédiaire d'un engrenage à développante à 16 dents (118b) du module 0,8.

10. Entraînement de roue arrière selon l'une des revendications 6 à 9, **caractérisé par le fait qu'**une pièce de pression (119, 219) pénétrant dans l'arbre de roue arrière (203) perpendiculairement à son axe longitudinal, disposée dans un évidement correspondant de l'arbre de la roue arrière (203), déplacée axialement par un ressort de compression (121, 221) disposé à l'intérieur d'une pièce cylindrique creuse de l'arbre de roue arrière (203), déplace l'organe d'accouplement (118, 218), en vue radiale, en dehors de l'arbre de roue arrière (203) et vers l'élément d'entraînement (2, 202).

11. Entraînement de roue arrière selon la revendication 10, **caractérisé par le fait que** l'évidement dans l'arbre de roue arrière (203) est un trou traversant.

12. Entraînement de roue arrière selon la revendication 10 ou 11, **caractérisé par le fait que** la pièce de pression (119, 219) est maintenue dans sa position radiale par une rondelle (120, 220), qui est disposée axialement entre le palier (109, 209) qui loge l'arbre de roue arrière (203) sur le cadre de bicyclette et le palier (106, 206) qui loge à l'intérieur, en vue radiale, l'élément d'entraînement (102, 202).

13. Entraînement de roue arrière selon l'une des revendications 10 à 12, **caractérisé par le fait qu'**un manchon d'impression (122) avec deux branches s'étendant sur les deux faces de la pièce de pression (119) est disposé à l'intérieur de la pièce cylindrique creuse de l'arbre d'entraînement (103) de l'arbre de roue arrière (103, 104), qui s'appuie axialement dans l'arbre d'entraînement (103) de l'arbre de roue arrière (103, 104) jusqu'à la roue arrière et qui maintient le ressort de compression (121) à distance du côté faisant face à l'élément d'entraînement (102) de la pièce de pression (119), le ressort de compression (121) déplaçant axialement une douille de guidage (124) disposée à l'intérieur de l'arbre de roue arrière (103, 104), qui présente des évidements pour le guidage de la pièce de pression (119) et la pièce de pression (119) appuie contre l'organe d'accouplement (118) et ce dernier se déplace vers l'élément d'entraînement (102).

14. Entraînement de roue arrière selon l'une des revendications 10 à 13, **caractérisé par le fait que** le cadre de bicyclette, le coussinet de palier (107), l'arbre de roue arrière (103, 104) et le palier (109) sont reliés entre eux, pendant que la pièce de pression (119) peut être montée ou démontée.

15. Entraînement de roue arrière selon l'une des revendications 2 à 14, **caractérisé par le fait que** l'arbre d'entraînement (3, 103) et l'arbre de sortie (4, 104) de l'arbre de roue arrière (3, 4 ; 103, 104) en deux parties présentent des diamètres extérieurs qui sont supérieurs au siège de palier, disposé sur l'arbre de sortie (4, 104) de l'arbre de roue arrière (3, 4 ; 103, 104), du palier (9, 109) logeant l'arbre de roue arrière (3, 4 ; 103, 104) dans le cadre de bicyclette (8).

16. Entraînement de roue arrière selon la revendication 15, **caractérisé par le fait que** l'arbre de sortie (4, 104) de l'arbre de roue arrière (3, 4 ; 103, 104) est réalisé au niveau de son extrémité dirigée vers la roue arrière (11) sous forme de bride de roue arrière, à laquelle peut être fixée la roue arrière (11).
